Europäisches
Patentamt

European
Patent Office

Office européen
des brevets

(11)  **EP 1 883 659 B2**

(12)  # NEW EUROPEAN PATENT SPECIFICATION
After opposition procedure

(45) Date of publication and mention
of the opposition decision:
**24.11.2021  Bulletin 2021/47**

(45) Mention of the grant of the patent:
**16.01.2013  Bulletin 2013/03**

(21) Application number: **06753931.2**

(22) Date of filing: **26.05.2006**

(51) Int Cl.:
***C08J 5/18*** $^{(2006.01)}$

(86) International application number:
**PCT/EP2006/005082**

(87) International publication number:
**WO 2006/125672 (30.11.2006 Gazette 2006/48)**

(54) **FILM COMPRISING PROPYLENE POLYMER WITH HIGH CRYSTALLINITY**

FILM UMFASSEND EIN PROPYLENPOLYMER MIT HOHER KRISTALLINITÄT

FILM DE POLYMÈRE DE PROPYLÈNE À CRISTALLINITÉ ÉLEVÉE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **27.05.2005  EP 05011486**

(43) Date of publication of application:
**06.02.2008  Bulletin 2008/06**

(73) Proprietor: **Borealis Technology Oy
06101 Porvoo (FI)**

(72) Inventors:
* **JÄÄSKELÄINEN, Pirjo**
**FIN-06150 Porvoo (FI)**
* **TUOMINEN, Olli**
**FIN-00930 Helsinki (FI)**
* **OMMUNDSEN, Espen**
**N-3970 Langesund (NO)**
* **ACKERMANNS, Nina**
**B-3980 Tessenderlo (BE)**

(74) Representative: **Kador & Partner PartG mbB
Corneliusstraße 15
80469 München (DE)**

(56) References cited:
**EP-A- 0 339 804          EP-A- 0 736 552
EP-A- 0 903 356          EP-A- 0 919 572
EP-A2- 0 497 590         EP-A2- 0 776 926
EP-B1- 0 885 918         EP-B1- 1 000 095
WO-A-99/24479            WO-A-2004/013193
WO-A1-01/46274           WO-A1-03/066324
US-A1- 2004 166 337**

* **Borealis brochure 2001, 'PP products for BOPP'**
* **Certificate of Analysis for HB300BF-Lot. B1-3109
& Delivery slips for HB300BF-Lot. B1-3109 &
Invoice for HB300BF-Lot. B1-3109**
* **Certificate of Analysis for HB300BF-Lot. B1-3273
& Delivery slips for HB300BF-Lot. B1-3273 &
Invoice for HB300BF-Lot. B1-3273**
* **Analysis for HB300BF-Lot. 3109 and Lot. 3273
(Xylene solubles)**
* **Analysis for HB300BF-Lot. 3109 and Lot. 3273
(13C-NMR)**

**EP 1 883 659 B2**

**Description**

The present invention is related to a film comprising high crystalline propylene polymer.

The stiffness-processability-balance of propylene polymers depends on the end-use application for which they are employed. In applications wherein good stretchability is needed, such as in biaxially oriented film applications, a propylene polymer with a combination of a high stiffness and good processability is difficult to achieve. A high crystalline propylene polymer produced using modem high-yield 4th and 5th generation of Ziegler-Natta catalysts offers the high stiffness, but its processability is normally problematic: Such high crystalline propylene has e.g. poorer stretchability compared to similar polymer produced using so called second generation of Ziegler-Natta catalysts with a low catalytic activity. For improving the processability of the high crystalline propylene polymer produced with the high-yield Ziegler-Natta catalysts, e.g. small amounts of a comonomer has been introduced into the polymer (see e.g. EP0339804 of Exxon). The addition of comonomer results in a lower isotacticity of such polypropylene and thus in a lower melting temperature which improves the processability for biaxially oriented polypropylene film applications. However, this improved processability property is paid with a reduced stiffness of a film.

It is also known, that i.a. a low melt flow rate (MFR) and a broad molecular weight distribution (MWD) contribute to a good processability. However, said stiffness-processability balance has remained a challenge. This can be seen from the fact that said second generation catalysts have still been conventionally used for preparing polymers that are feasible for the above film applications, although they are less favorable due to i.a. their low activity and a typical need of a further process step, i.e. washing of the polymerized polymer product. Accordingly, the product window for propylene polymers with the above stiffness-processability-balance has been limited.

WO2004/013193 discloses a polypropylene having a content of isotactic pentads (mmmm) higher than 97%, a $M_w/M_n$ ratio equal to or higher than 6 and a $M_z/M_w$ ratio equal to or lower than 5.5. However, the stiffness-processability-balance of propylene polymers has not been mentioned. Furthermore, no discussion of the isotacticity distribution and the isotactic sequence length for the polymers can be found.

Accordingly, there is a continuous need to further develop new propylene polymers, which are characterized by an excellent stiffness-processability-balance, making them suitable for certain end applications such as films, especially bioriented films, used in packaging articles or in articles for electrical applications, such as in capacitor films.

The object of the present invention is therefore to broaden the product window of polypropylene materials in demanding end-use applications. More particularly the object of the present invention is to provide a propylene polymer having a very advantageous stiffness-processability-balance, in particular for film applications including biaxially oriented polypropylene film applications.

Surprisingly, it has been found that the above-stated object can be achieved with propylene polymer having a high crystallinity and a broad molecular weight distribution.

An indicator for the crystallinity of a polymer is its amount of decaline and/or xylene soluble fraction. The decaline and/or xylene soluble fraction contains polymer chains with a low molecular weight and a low stereo regularity. Hence, as the propylene polymer of the invention shall have a high crystallinity, i.e. the amount of decaline polymer and/or xylene soluble fraction must be low.

In turn, the propylene polymer of the invention shall also have a broad molecular weight distribution (MWD), since a broad MWD improves the processability of the polymer and provides feasible means for further tailoring the mechanical and/or processing properties of the polymer depending on the needs desired for the end-use application. The molecular weight distribution (MWD) can be measured by SEC (also known as GPC), whereby it is expressed as $M_w/M_n$, or by a rheological measurement, like Polydispersity Index (PI) - measurement or Shear Thinning Index (SHI) - measurement. All these measurements are known and further defined below under "Definitions and Determination Methods".

The polymer used in the invention is a propylene polymer having decaline solubles not more than 1.3 wt.-%. Furthermore, the propylene polymer of the invention has a polydispersity index (PI) of at least 5.0, Xylene solubles not more than 1.4 wt.%, a MFR (230°C, 2,16 Kg) of 2 to 6 and an isotactic sequence length of at least 150, measured as meso run length values by means of $^{13}$C-NMR.

Hence, for the above given reasons, the present invention is related to a film comprising a high crystalline propylene polymer having decaline solubles not more than 1.3 wt.-%. Furthermore, the propylene polymer of the invention has a polydispersity index (PI) of at least 5.0, typically of at least 5.5, and preferably of at least 6. Said combination provides a highly feasible stiffness-processability balance. Moreover, the propylene polymer of the invention has Xylene solubles not more than 1.4 wt.

In one preferable embodiment the decaline solubles are not more than 1.0 wt.-%, more preferably not more than 0.8 wt.-%.

For other embodiments, the XS of the present propylene polymer may be not more than 1.3 wt.-%, or even not more than 1 wt.-%.

It is important for the present invention that the propylene polymer has a high crystallinity. To achieve a high crystallinity, the propylene polymer must have a high isotacticity. Therefore, it is preferred that the propylene polymer has an isotacticity expressed in mmmm pentads of at least 97 %, more preferred of at least 97.5 %, measured by means of $^{13}$C-NMR.

Furthermore, the propylene polymer has an isotactic sequence length of at least 150, preferably 200, more preferably of at least of 300, measured as meso run length values by means of $^{13}$C-NMR as defined below under "Definitions and Determination methods". Depending on the end-use application, in some embodiments of the invention, even a sequence length of at least 400 can also be beneficial and thus covered by the invention. The longer the meso run, the higher the crystallinity of the material.

Generally the higher the isotacticity the narrower the process window and a higher stretching force is needed. The fact that the propylene polymer of the present invention has additionally a broad molecular weight distribution (MWD) benefits in improved processability and stretchability of the propylene polymer.

Another indicator of the broad molecular weight distribution, beside the polydispersity index (PI), is the ratio of the $M_w/M_n$ measured by SEC. Hence, it is preferred that the $M_w/M_n$ ratio is of at least 5, preferably of at least 5.5, and more preferably of at least 6. In turn, the upper limit of the $M_w/M_n$ ratio is preferably no more than 20, preferably no more than 10 and more preferably no more than 9 and yet more preferably no more than 8.5.

Moreover, the molecular weight of a polymer can be further expressed by way of its melt flow rate (MFR). An increase in molecular weight means a decrease in the MFR-value. The melt flow rate ($MFR_2$) is preferably measured as described below under "Definitions and Determination methods".

The $MFR_2$ is of 2 to 6 g/10 min, preferably 2 to 5 g/10 min.

Furthermore, as stated above, the shear thinning index (SHI) is a very sensitive indicator of MWD. The higher the SHI value the broader the MWD. Therefore, the propylene polymer of the invention has preferably SHI(0/50) of at least 12, preferably of at least 14, more preferably of at least 16. Typically SHI(0/50) may vary between the range of 15 to 22, preferably of 16 to 20. In another embodiment SHI(0/50) of 16 to 18 is feasible. Advantageously, the propylene polymer has typically a rather high melting temperature. Accordingly, it is preferable that the melting temperature is of at least 162°C, more preferably of at least 163°C.

In addition, it is preferred that the propylene polymer has a crystallinity of at least 50% measured by DSC. Moreover, the crystallization temperature ($T_{cr}$) shall be preferably of at least 110°C, more preferably of at least 113°C, e.g. between 110°C and 122°C, such as 115°C and 120°C without any added nucleating agent. The crystallinity and thus the crystallization temperature ($T_{cr}$) of the propylene polymer can be further increased in a manner known in the field, e.g. by adding nucleation agents during or after polymerization of the polymer. In one embodiment, the propylene polymer is produced in the presence of a nucleating agent, whereby the composition has a crystallization temperature ($T_{cr}$) of 118°C or more.

According to a preferable embodiment, the propylene polymer has long isotactic sequences and an even distribution of said isotactic sequences within the polymer chain, which combination further contributes both to the high crystallinity and good processability.

A measurement of the isotactic sequence length distribution can been performed by using the temperature raising elution fraction (TREF) technique (exact description below in the experimental part), which fractionates propylene polymers according to the solubility differences. It has been clearly demonstrated for propylene polymers that TREF technique fractionates the propylene polymer according to the longest crystallisable sequences in the chain, which increases almost linearly with the elution temperature. Hence the higher the maximum temperature ($T_P$) and the higher the weight average temperature ($T_w$) of the TREF curve, the longer are the isotactic sequences.

Hence, it is further preferred that the high crystalline propylene polymer has

a) $T_p$ of at least 122.5°C, more preferably of at least 123 °C; and
b) $T_w$ of at least 118°C, more preferably of at least 119°C, whereby the $T_p$ and the $T_w$ are calculated from the temperature raising elution fraction (TREF) function of the propylene polymer in the range of 80 to 140°C, wherein $T_p$ is the maximum temperature of the TREF function;
$T_w$ the weight average temperature of the TREF function defined by

$$T_w = \frac{\sum c_i \cdot T_i}{\sum c_i}$$

$T_i$ the temperature at which the concentration $c_i$ of an elute is determined; and $c_i$ the concentration of the elute at the temperature $T_i$.

The TREF determination may typically be effected as described below under "definitions and determination methods" using the TREF instrument, including the software thereof for the above and below calculations.

It is in particular preferred that the propylene polymer according to this invention has a value σ of no more than 10 °C, whereby σ is defined as follows:

$$\sigma = \sqrt{\frac{\sum c_i \left(T_i - T_w\right)^2}{\sum c_i}}$$

whereby each variable of this equation is obtained from the TREF-function as defined above. Said σ value indicates the beneficial isotactic sequence distribution of the present invention.

Furthermore, it is preferred that the propylene polymer has a $T_p/R$ ratio of at least 75°C, suitably of at least 80°C, preferably of at least 85°C. In some embodiments of the present propylene polymer $T_p/R$ ratio can be even of at least 90°C depending on the end-use application. $T_p/R$ is obtained from the TREF-function as defined above, wherein R is defined as follows:

$$R = \left(\frac{T_w}{T_n} - 1\right) \cdot 100$$

wherein $T_n$ is the number average temperature of the TREF function defined by

$$T_n = \frac{\sum c_i}{\sum c_i / T_i}$$

The $T_p/R$ ratio is not only an indicator for the long isotactic sequence length but also for an even isotactic sequence distribution. $T_p/R$ increases with increasing of the isotactic sequence length and with decreasing of the isotactic sequence length distribution. Therefore, the $T_p/R$ ratio is a further indicator for the balanced stiffness-processability as a long isotactic sequence length contributes to the crystallinity of the propylene polymer and the even sequence distribution improves the processability.

A further indicator of a long isotactic sequence length and an even sequence distribution is the SDBI value defined by solubility distribution index

$$SDBI = \sqrt[4]{\frac{\sum \left| \left(T_i - T_w\right)^4 c_i \right|}{\sum c_i}}$$

A low value of SDBI indicates a narrow TREF curve peak and thus an even isotactic sequence length distribution. Therefore, it is preferred that the SDBI is lower than 24 °C.

Furthermore, it is advantageous that the amount of catalyst residues in the polymer are low. Accordingly, the propylene polymer has preferably an Al-content of less than 50 ppm, more preferably of less than 48 ppm. Preferably, the low Al-content is in the propylene polymer obtained directly after the polymerization step, i.e. the Al-content of the reactor powder, without any post-reactor treatments such as washing steps to remove or decrease the aluminium in the propylene polymer. The reactor powder is also called as reactor-made propylene polymer. Depending on the end-use, it is of course possible to further wash the reactor-made product to reduce further any undesired residues contained therein, if needed.

The invention covers both films comprising, homopolymers of propylene and copolymers, preferably random copolymers, of propylene with one or more alpha-olefins including ethylene, however, a homopolymer is preferred. In case of random copolymers it is preferred that only small amounts of comonomer is incorporated to the propylene chains, preferably less than 0.2 wt%, more preferably less than 0.1 wt%, still more preferably less than 0.05 wt%, yet more preferably less than 0.005 wt%, other alpha-olefins than propylene in the polymer. The comonomer is preferably at least ethylene.

According to a preferred embodiment the propylene polymer has a broad MWD and comprises at least two propylene polymer components with different weight average molecular weights ($M_w$) and thus with different melt flow ratios (MFR). The lower molecular weight (LMW) component has a higher MFR than the higher molecular weight (HMW) component. The ratio between the $MFR_2$ of LMW component and $MFR_2$ of HMW component is typically at least 30, preferably at least 40, more preferably at least 50. The upper limit of said ratio of ($MFR_2$ of LMW):($MFR_2$ of HMW) may

be up to 400, preferably up to 200.

Preferably, the propylene polymer is bimodal comprising a LMW-component and a HMW-component. The amount of the LMW-component is typically between 30 to 70 wt% preferably 40 to 60 wt % of the total amount of propylene polymer. In turn, the amount of the HMW-component is typically between 30 to 70 wt%, preferably 40 to 60 wt%, of the total amount of propylene polymer. Preferably, both components are homopolymers as defined above. The multimodality, preferably bimodalty, with respect to the molecular weight distribution provides very advantageous MWD for the final propylene polymer.

According to a preferable embodiment, the propylene polymer of the invention is a reactor-made propylene polymer and has at least the $T_p$ and $T_w$ values as defined below in claims. More preferably, one or more of the following properties of the reactor-made propylene polymer is/are as given above or in claims: $T_p/R$, $\sigma$, SDBI, MWD, XS, PI, decaline solubles, isotacticity index, isotactic sequence length and MWD, preferably at least one of XS, PI or decaline solubles.

The reactor-made propylene polymer means herein the reaction product as obtained from the polymerization process, i.e. the reactor-made propylene polymer has not been subjected to any washing or treatment step for decreasing or removing 1) the Al or other residues originating from the catalyst or 2) the fraction of soluble polymers determined as XS or decaline solubles (e.g. in order to increase the degree of isotacticity), or both 1) and 2). Naturally, if desired, the reactor-made propylene polymer of this embodiment may then be treated in a subsequent treatment step, e.g. washing step, in a known manner for further tailoring, e.g. for further reducing the Al residues and/or soluble polymer fraction, of the product.

Further preferably, the propylene polymer of the invention is obtainable by a Ziegler Natta catalyst, more preferably by a high yield 4th or 5th generation Ziegler Natta catalyst.

The present disclosure provides also a process for preparing the propylene polymer, which, however, does not fall under the scope of the claims. Therein the propylene monomers, optionally together with one or more comonomers, are polymerized in the presence of a polymerization catalyst. In case the propylene polymer consists of one component only, the process is a single-stage process.

In principle, any polymerization method including solution, slurry and bulk polymerization or gas phase polymerization can be used for producing the propylene polymer. Bulk means in the present application a polymerization in reaction medium comprising at least 60 wt% monomer.

The disclosure further provides a process for producing a propylene polymer comprising at least two different propylene polymer components with different molecular weights as defined above, wherein each polymer component is produced by polymerizing propylene monomers, optionally together with one or more comonomers, in the presence of a polymerization catalyst in a multi-stage polymerization process using one or more polymerization reactors. Each stage may be effected in parallel or sequentially using the same or different polymerization method. In case of a sequential stage the polymer components may be produced in any order operating each step, except the first step, in the presence of the polymer component formed and preferably the catalyst used in the preceding step. This process, however, does not fall under the scope of the claims.

Although the preferable method for producing a multimodal polypropylene is the multi-stage process, wherein each or part of the components are blended in situ during the polymerization process thereof, the disclosure not falling under the scope of the claims covers also mechanical blends, wherein two or more separately produced propylene polymer components are blended mechanically in a manner known in the art.

Preferably, the propylene polymer is at least bimodal with respect to the MWD and comprises preferably a LMW-component and a HMW-component as defined above, whereby one of the propylene polymer components is produced in a slurry process and the other polymer component is preferably produced by gas phase polymerization in a gas phase reactor.

A preferred embodiment of the process of the disclosure not falling under the scope of the claims is also provided for producing the above propylene polymer of the invention which comprises at least one propylene homo or copolymer component and optionally a further propylene homo or copolymer component, wherein the process includes the steps:

a) polymerizing in a slurry reactor, e.g. a loop reactor, propylene monomers, optionally together with one of more copolymers, in the presence of a polymerization catalyst to produce a first propylene polymer and, optionally, transferring the reaction product of step a) to a subsequent gas phase reactor,
b) polymerizing in a gas phase reactor propylene monomers, optionally together with one or more comonomers, in the presence of the reaction product of step a) to produce a second propylene polymer for obtaining the final propylene polymer.

The propylene polymer obtained from the above embodiment is one preferable example of the reactor-made propylene polymer.

In case of at least a bimodal propylene polymer as defined above, the HMW-component is preferably produced in step (a) and the LMW-component is produced in a subsequent step (b) in the presence of the reaction product of step (a) obtained from the first reactor.

The above process not falling under the scope of the claims and comprising at least steps (a) and (b) is very advantageous, since it provides very feasible means for producing the highly crystalline propylene polymer, preferably a reactor-made propylene polymer, with a multimodality, preferably bimodality, for achieving the very preferable broad MWD, and also the optional stereochemistry (the preferable even distribution and length of the isotactic sequences). Furthermore, said process enables the use of modem, 4th or 5th generation Ziegler-Natta catalysts for producing the propylene polymer of the invention in markedly high yields. Accordingly the disclosure further provides a propylene polymer obtainable by any of the above described process, preferably by the above process comprising at least the steps (a) and (b).

Such a preferred multi-stage process is a loop-gas phase process (such as developed by Borealis A/S, Denmark, known as Borstar® technology) as described inter alia in EP 0 887 379 and WO92/12182, respectively. These documents are included herein by reference.

In a preferred embodiment the propylene polymer is a homopolymer polymer, preferably at least the bimodal propylene homopolymer, and is obtainable by any of the processes as described above.

In case of random copolymer, the comonomer can be introduced in any of the step (a) and/or (b) in the above preferred multi-stage process not falling under the scope of the claims.

The properties of the polymer composition can be adjusted or controlled with the process conditions in a known manner, e.g. with one or more of the following process parameters: temperature, hydrogen feed, comonomer feed, propylene feed, catalyst, the type and amount of an external donor (if used), split between two or more components of a multimodal polymer, e.g. between components obtainable from step (a) and (b).

Preferably, the above embodiment not falling under the scope of the claims comprises the process steps (a) and (b), whereby the polymerization conditions for the slurry reactor of the first stage may be as follows:

the temperature is within the range of at least 80°C, preferably at least 85°C;

the pressure is within the range of 20 to 80 bar, preferably 30 to 60 bar; and hydrogen can be added for controlling the molar mass in a manner known in the art, and

the reaction mixture from the slurry (bulk) reactor is then transferred to the gas phase reactor, i.e. to step b), wherein the polymerization conditions are preferably as follows:

The temperature is within the range of at least 85°C, preferably of at least 90°C;

the pressure is within the range of 5 to 50 bar, preferably 15 to 20 bar, most preferably between 50 to 35 bar; and hydrogen can be added for controlling the molar mass known in the art.

It is in particular preferred, that the temperature in the polymerization (a) and (b) is more than 80°C and the temperatures in each step can be the same or alternatively the temperature in the gas phase step (b) is higher than in the slurry reactor step (a).

The obtained propylene polymer can be further worked up, e.g. the propylene polymer is pelletized by using an extruder as known in the art. Moreover conventional additives can also be used as evident for a skilled person in the art.

In principle the composition of the invention can be produced using any polymerization catalyst, e.g. a Ziegler Natta type of catalyst, a single site catalyst including metallocenes and non-metallocenes. The catalyst may be based on one or more transition metal catalysts or a late transition metal catalysts or any combinations thereof. The meaning of these type of catalysts is known in the field.

Preferable catalyst is a Ziegler-Natta catalyst, particularly a 4th and 5th generation type of high-yield Ziegler-Natta catalyst, which comprises a catalyst component, a co-catalyst component and at least one electron donor (internal and/or an external electron donor, preferably at least external donor). Preferably, the catalyst component is a Ti-Mg based catalyst component and typically the cocatalyst is Al-alkyl based compound. As examples of the usable catalysts reference is made to US 5 234 879, WO92/19653, WO92/19658 and WO99/33843.

Preferable external donors are known silane-based donors, preferably dicyclopentyl dimethoxy silane or cyclohexyl methyl dimethoxy silane.

As stated above also nucleating agents can be added to the propylene polymer. These are preferably added during the polymerization process of the propylene polymer. One way of adding the nucleating agent is to use a catalyst system modified with a nucleating agent as known in the art, e.g. as described in WO 9924478 and WO 9924479.

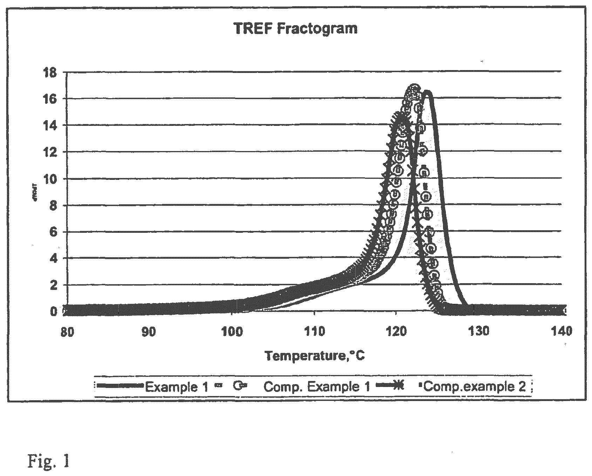

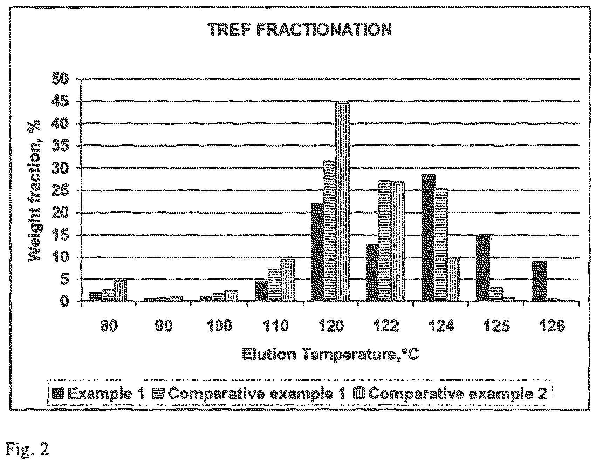

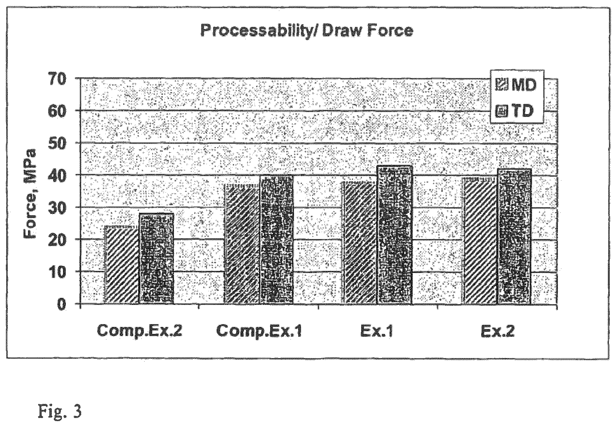

The propylene polymer has good stretchability properties as demonstrated in the experimental part below in tables 1-3 and figures 1-3.

Accordingly, the described propylene polymer may be used in various end applications. The stiffness-processability balance of the polymer makes is highly suitable for various film applications, particularly for biaxially oriented film applications.

Compared to film applications, wherein comonomers are incorporated to propylene polymers to achieve a better processability, the propylene polymer of the present invention has not only a very even isotactic sequence distribution but also very long isotactic sequence lengths resulting in the characteristics as defined above.

Moreover, the propylene polymer composition has also good barrier properties which are advantageous e.g. for packaging material.

The propylene polymer is also highly suitable for very demanding end applications, such as capacitor film applications. In capacitor film applications high purity levels are also needed, whereby, depending on the requirements, the propylene polymer of the present invention may be subjected to a further washing step, if desired, for further reducing the amount of catalyst residues, such as Al residues.

In addition the present invention comprises also biaxially oriented films, comprising the propylene polymer as defined above. The film may be a monolayered film comprising, or preferably consisting of, the propylene polymer. Alternatively, the film may be a multilayer film comprising the propylene polymer in one or more of the layers of the film. In multilayer film the propylene homopolymer preferably forms a base (or support) layer.

The films can be produced according to or analogously to methods well known in the art.

The propylene polymer used in the invention may also be further blended e.g. mechanically to other polymer components depending on the end application. Such blends are also covered by the invention.

## Definitions and Determination methods

The terms and determination methods for the measured properties used for defining the invention apply generally both for the description part above and for the examples and claims below, unless otherwise stated:

- **TREF** analysis: **Temperature Rising Elution Fractionation (TREF)** analysis is well known.
Instrument: CRYSTAF-TREF 200 instrument (company: Polymer CHAR, Spain) including the software for calculating the parameters and equitation. Solvent: 1,2,4-trichlorobenzene (TCB) stabilized with 300ppm of BHT.
Concentration: 80mg in 20ml of TCB
Determination conditions: Crystallization rate: 0.5°C/min (between 95°-40°), elution rate: 1.00°C/min (between 40°-140°) and pump flow: 0.5ml/min.

The parameters and equations used to describe the high isotacticity level and the even isotacticity distribution (=isotactic sequence distribution) are calculated from the formed TREF curve as follows: The statistic parameters are calculated with the following formulas and using the software of the above TREF instrument:

Tp= the maximum temperature
Tw= weight average temperature
Tn= number average temperature

$$T_w = \frac{\sum c_i \cdot T_i}{\sum c_i}$$

$$T_n = \frac{\sum c_i}{\sum c_i / T_i}$$

$$r = \frac{T_w}{T_n}$$

$$R = \left( \frac{T_w}{T_n} - 1 \right) \cdot 100$$

$$\sigma = \sqrt{\frac{\sum c_i \left( T_i - T_w \right)^2}{\sum c_i}}$$

$$SDBI = \sqrt[4]{\frac{\sum \left| (T_i - T_w)^4 c_i \right|}{\sum c_i}}$$

It is to be understood that in principle any other determination method could be used which would give the corresponding results as the above determination method (within the limits of measurement accuracy as evident for a skilled person).

- Melting temperature $T_m$, crystallization temperature $T_{cr}$, and the degree of crystallinity: measured with Mettler TA820 differential scanning calorimetry (DSC) on $3 \pm 0.5$ mg samples. Both crystallization and melting curves were obtained during 10°C/min cooling and heating scans between 30°C and 225°C. Melting and crystallization temperatures were taken as the peaks of eadotherms and exotherms. The degree of crystallinity was calculated by comparison with heat of fusion of a perfectly crystalline polypropylene, i.e. 209 J/g.

- NMR: The $C^{13}$ NMR spectra of polypropylenes were recorded on Bruker 400 MHz spectrometer at 130°C from samples dissolved in 1,2,4-trichlorobenzene/benzene-d6 (90/10 w/w).

For the **pentad analysis** the assignment is done according to the methods described in literature: T. Hayashi, Y. Inoue, R. Chüjö, and T. Asakura, Polymer 29 138-43 (1988) and Chujo R, et al, Polymer 35 339 (1994).
Isotactic sequence length is expressed as **meso run length** which was determined from mmmm and mmmr pentads

$$MRL = 2 \times mmmm / mmmr.$$

- **SEC**: The weight average molecular weight **(Mw)** and number average molecular weight **(Mn)** and thus the molecular weight distribution **(MWD, Mw/Mn)** of polymers were determined with A Millipore Waters ALC/GPC operating at 135 °C and equipped with two mixed bed and one $10^7$ Å TSK-Gel columns (TOSOHAAS 16S) and a differential refractometer detector. The solvent 1,2,4-trichlorobezene was applied at flow rate of 1 ml/min. The columns were calibrated with narrow molecular weight distribution polystyrene standards and narrow and broad polypropylenes.

- **Multimodality, including bimodality**, with respect to the molecular weight distribution (MWD) means that the polymer comprises two or more polymer components with differing MFR's (and thus Mw's). Preferably the polymer components of the multimodal polymer are produced in two or more separate reactors, respectively, so that the products obtained from each reactor have said differing MFR's and Mw's).

- **MFR₂**: measured according to ISO 1133 (230°C, 2.16 kg load). E.g. the LMW and HMW components of the propylene polymer as defined above preferably have different $MFR_2$ values, whereby the LMW component has higher MFR than the HMW component.

- **Weight-%** is abbreviated as w% or wt-%

- **The xylene solubles (XS, wt%)**: analysis according to the known method: 2.0 g of polymer was dissolved in 250 ml p-xylene at 135°C under agitation. After $30 \pm 2$ minutes the solution was allowed to cool for 15 minutes at ambient temperature and then allowed to settle for 30 minutes at $25 \pm 0.5$°C. The solution was filtered and evaporated in nitrogen flow and the residue dried under vacuum at 90°C until constant weight is reached.

$$XS\% = (100 \times m_1 \times v_0) / (m_0 \times v_1),$$

wherein

$m_0$ = initial polymer amount (g)
$m_1$ = weight of residue (g)
$v_0$ = initial volume (ml)
$V_1$ = volume of analyzed sample (ml)

- **Decaline solubles:** A 2 g polymer sample was dissolved in 100 ml decaline (decahydronaphthalene) by heating at 160°C and stirring for 1 h. The solution was cooled at room temperature for 1 h and then at 25°C another 1 h. The precipitated insoluble portion is filtrated and vacuum dried at 140°C. The total solids content of the filtrate is as a measure for the soluble fraction. Calculated as decaline solubles= [(gram of residue)/(gram of sample)] x 100%.

- **Stretchability**: Samples of about 85 mm x 85 mm were cut from the cast-film (with film thickness of 1 mm) for biaxial drawing in a laboratory film stretcher KARO IV (Brückner Maschinenbau GmbH, Siegsdorf, Germany). The drawing was performed at temperatures in the range of 160 -165°C.

- **Rheology:** Dynamic rheological measurements were carried out with Rheometrics RDA-II QC on compression molded samples under nitrogen atmosphere at 200°C using 25 mm -diameter plate and plate geometry. The oscillatory shear experiments were done within the linear viscoelastic range of strain at frequencies from 0.01 to 500 rad/s. (ISO6721-1)

The values of storage modulus (G'), loss modulus (G"), complex modulus (G*) and complex viscosity ($\eta^*$) were obtained as a function of frequency ($\omega$).

**The Zero shear viscosity** ($\eta_0$) was calculated using complex fluidity defined as the reciprocal of complex viscosity. Its real and imaginary part are thus defined by

$$f'(\omega) = \eta'(\omega)/[\eta'(\omega)^2 + \eta''(\omega)^2]$$

and

$$f''(\omega) = \eta''(\omega)/[\eta'(\omega)^2 + \eta''(\omega)^2]$$

From the following equations

$$\eta' = G''/\omega \quad \text{and} \quad \eta'' = G'/\omega$$

$$f'(\omega) = G''(\omega) \cdot \omega/[G'(\omega)^2 + G''(\omega)^2]$$

$$f''(\omega) = G'(\omega) \cdot \omega/[G'(\omega)^2 + G''(\omega)^2]$$

**The polydispercity Index, PI,** is calculated from cross-over point of G'($\omega$) and G"($\omega$).

There is a linear correlation between f' and f'' with zero ordinate value of $1/\eta_0$. (Heino et al.[1])

For polypropylene this is valid at low frequencies and five first points (5 points/decade) are used in calculation of no.

[0078] **Elasticity indexes (G') and shear thinning indexes** (SHI), which are correlating with MWD and are independent of MW, were calculated according to Heino[1,2] (below).

SHI is calculated by dividing the Zero Shear Viscosity by a complex viscosity value, obtained at a certain constant shear stress value, G*. The abbreviation, SHI (0/50), is the ratio between the zero shear viscosity and the viscosity at the shear stress of 50 000 Pa.

1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362

2) The influence of molecular structure on some rheological properties of polyethylene. Heino, Eeva-Leena. Borealis Polymers Oy, Porvoo, Finland. Annual Transactions of the Nordic Rheology Society, 1995

- By the term **"random copolymer"** is meant herein that the comonomer in said copolymer is distributed randomly, i.e. by statistical insertion of the comonomer units, within the copolymer chain.

- **Comonomer content (wt%)** can be determined in a known manner based on Fourier transform infrared spectroscopy (FTIR) determination calibrated with $C^{13}$-NMR.

- **A modern, high-yield 4th or 5th Ziegler-Natta (ZN) catalyst** means a further generations of ZN catalysts which have been developed after the 2nd generation ZN catalysts and the catalytic activity of which is markedly higher than that of the 2nd generation ZN catalysts as very well known in the art.

- **Al-content is determined by ICP-spectrometry (Inductively coupled plasma emission)**. The instrument for determining the Al-content was an ICP Optima 2000 DV, PSN 620785 (supplier PerkinElmer Instruments, Belgium), with the software of the instrument. The polymer sample was first ashed in a known manner, then dissolved in an appropriate acidic solvent. The dilutions of the standards for the calibration curve are dissolved in the same solvent as the sample and the concentrations chosen so that the concentration of the sample would fall within the standard calibration curve (ppm: means parts per million by weight).

The present invention is illustrated by means of examples:

## Examples

The raw materials are e.g. commercially available or can be produced according or analogously to the known methods described in literature, unless otherwise specified.

**Examples 1 and 2:**

**Polymerisation:**

The catalyst used in both polymerizations was a known, modern high-yield, i.e. highly active, stereospecific transesterified $MgCl_2$-supported Ziegler-Natta catalyst prepared according to US 5234879. The catalyst was contacted with triethylaluminium (TEAL) as a cocatalyst and an external donor (dicyclopentyl dimethoxysilane) and then prepolymerised in a known manner in the presence of propylene and the cocatalyst in a separate prepolymerisation step. In both examples 1 and 2 the Al/Ti ratio was 200 mol/mol and Al/donor ratio was 5 mol/mol.

The polymerization was carried out in a continuous multistage process in pilot scale comprising a loop reactor and a fluidised bed gas phase reactor. The propylene and hydrogen were fed together with the activated catalyst into the loop reactor which operated as a bulk reactor at conditions given in table 1 (step (a) as defined above, production of the 1st propylene polymer component). Then the polymer slurry stream was fed from the loop reactor into the gas phase reactor and more propylene and hydrogen were fed in the gas phase reactor (step (b) as defined above, production of the 2nd propylene component in the presence of the reaction product of step (a) to obtain the propylene polymer of the invention). The polymerisation conditions in the gas phase are also given in table 1. Table 1 gives also the polymer properties of the loop, gas phase and final product.

The polymers of comparative examples 1 and 2 are commercially available grades, which have both been produced using the known 2nd generation Ziegler-Natta catalyst. The properties of these comparative materials are given in table 2 and figures.

**TABLE 1**

|  | Example 1 | Example 2 |
|---|---|---|
| **Catalyst type** |  |  |
| Donor type | dicyclo pentyl dimethoxy silane | dicyclo pentyl dimethoxy silane |
| Al/Ti ratio (mol/mol) | 200 | 200 |
| **Catalyst type** |  |  |
| Al/donor ratio (mol/mol) | 5,0 | 5,0 |
| **Loop** |  |  |
| Temperature (°C) | 85 | 85 |
| Split % | 55 | 58 |
| $MFR_2$ (g/10 min) | 0,6 | 0,5 |
| XS (%) | 1,7 | 2,0 |

(continued)

| GPR | | |
|---|---|---|
| Temperature (°C) | 85 | 85 |
| **GPR** | | |
| Temperature (°C) | 85 | 85 |
| Split % | 45 | 42 |
| MFR$_2$ (g/10 min) calculated | 55 | 100 |
| **Final propylene polymer** | | |
| MFR$_2$ (g/10 min) | 3,6 | 3,4 |
| **XS (%)** | 1,3 | 1,2 |
| ETA0, Zero viscosity (Pas) | 10826 | 13802 |
| **SHI (0/50)** | 17,8 | 20,0 |
| PI | 6,1 | 6,0 |
| | | |
| **Tm (°C)** | 163.5 | 166,4 |
| Cryst (%) | 52.7 | 54,4 |
| T$_{cr}$ (°C) | 118,4 | 123,9 |
| **Moisture barrier** | | |
| Permeability g/m2/24h | 4,2 | 4,3 |

**TABLE 2**

| | Unit | **Example 1** | **Comp. Example 1** | **Com. Example 2** |
|---|---|---|---|---|
| MFR | g/10min | 3,6 | 3,1 | 3,4 |
| AL | ppm | 47,0 | 2 | 9,5 |
| TI | ppm | <1,0 | 1 | 0,9 |
| mmmm pentad | % | 97,65 | 94.25 | 91.84 |
| meso run length | | 574 | 90.0 | 70 |
| Decaline solubles | Wt% | 0,7 | 1,6 | 3,4 |
| XS | % | 1,3 | 1,2 | 3,2 |
| ETA 0 | Pa*s | 10826 | 11103 | 10766 |
| SHI (0/50) | None | 17,8 | 12,8 | 12,9 |
| PI | 1/Pa | 6,1 | 5,32 | 5,2 |
| Mw | mol/g | 430000 | 439000 | 440000 |
| Mn | mol/g | 54000 | 64600 | 62000 |
| MWD | | 8 | 6,8* | 7,1 |
| Tm | °C | 163,5 | 163,1 | 159,3 |
| crystallinity | % | 52,7 | 52,9 | 48 |
| Tcr | °C | 118,4 | 114,7 | 112 |
| Moisture barrier | | | | |

(continued)

|  | Unit | Example 1 | Comp. Example 1 | Com. Example 2 |
|---|---|---|---|---|
| Permeability | g/m2/24h | 4,2 | 4,3 | 6,6 |

As can be seen from table 2, the present propylene polymer has i.a. an improved isotactic sequence length (meso run length) over the prior art.

**TABLE 3**

|  |  | Example 1 | Comp. Example 1 | Comp. Example 2 |
|---|---|---|---|---|
| Elution temperature, °C |  | Cumulative fraction, % |  |  |
| 98 | % | 3,0 | 4,4 | 7,4 |
| 110 | % | 7,7 | 12,0 | 17,4 |
| 120 | % | 29,5 | 43,5 | 62,0 |
| 122 | % | 42,2 | 70,6 | 88,9 |
| 125 | % | 85,2 | 99,3 | 99,6 |
|  |  |  |  |  |
| Tp | °C | 123,8 | 122,4 | 120,8 |
| Tw | °C | 119,93 | 117,35 | 114,86 |
| r |  | 1,013 | 1,017 | 1,028 |
| R |  | 1,319 | 1,665 | 2,848 |
| $\sigma$ | °C | 9,72 | 10,73 | 13,32 |
| SDBI | °C | 23,84 | 24,62 | 27,93 |
| Tp/R | °C | 93,85 | 73,53 | 42,41 |

## Claims

1. A film comprising a high crystalline propylene polymer having decaline solubles not more than 1.3 wt% at 25 °C, xylene solubles not more than 1.4 wt% at 25 °C, a $MFR_2$ of 2 to 6 g/10min, measured according to ISO 1133 (230°C, 2.16 kg load), a polydispersity index (PI) of at least 5.0, and an isotactic sequence length of at least 150, measured as meso run length values by means of $^{13}$C-NMR.

2. Film according to claim 1, wherein the propylene polymer has xylene solubles not more than 1.3 wt% at 25 °C.

3. Film according to claim 1 or 2, wherein the propylene polymer has a chain isotacticity index (mmmm pentads) of at least 97 %, measured by means of $^{13}$C-NMR.

4. Film according to any one of the preceding claims, wherein the propylene polymer has an isotactic sequence length of at least 200, measured as meso run length values by means of $^{13}$C-NMR.

5. Film according to any one of the preceding claims, wherein the propylene polymer has a $M_w/M_n$ of at least 5, measured by means of SEC.

6. Film according to any one of the preceding claims, wherein the propylene polymer has a shear thinning index being the ratio of the zero shear viscosity and the viscosity at the shear stress of 50 000 Pa (SHI(0/50)) of at least 12.

7. Film according to any one of the preceding claims, wherein the propylene polymer has a $MFR_2$ of 2 to 5 g/10min, measured according to ISO 1133 (230°C, 2.16 kg load).

8. Film according to any one of the preceding claims, wherein the propylene polymer has melting temperature ($T_m$) of at least 162 °C, measured by means of DSC.

9. Film according to any one of the preceding claims, wherein the propylene polymer has crystallization temperature ($T_{cr}$) of at least 113 °C, preferably at least 115 °C, measured by means of DSC.

10. Film according to any one of the preceding claims, wherein the propylene polymer has crystallinity of at least 50 %, calculated from DSC measurements.

11. Film according to any one of the preceding claims, wherein the propylene polymer has an Al content less than 50 ppm.

12. Film according to any one of the preceding claims, wherein the propylene polymer is a homopolymer.

13. Film according to any one of the preceding claims, wherein the propylene polymer is multimodal polymer with respect to molecular weight distribution.

14. Film according to claim 13, wherein the propylene polymer comprises two propylene polymer components with different weight average molecular weights ($M_w$), preferably a reactor blend of isotactic homopolymers.

15. Film according to claim 14, whereby the propylene polymer consists of 30 to 70 wt% of a low molecular weight (LMW)-fraction and 70 to 30 wt% of a high molecular weight (HMW)-fraction.

16. Film according to any of the preceding claims, wherein the propylene polymer is a reactor-made propylene polymer.

17. Film according to any of the preceding claims, wherein the propylene polymer has

    a) $T_p$ of at least 122.5 °C and
    b) $T_w$ of at least 118 °C, whereby

        the $T_p$ and the $T_w$ are calculated from the temperature rising elution fractionation (TREF)-function of the propylene polymer in the range of 80 to 140 °C, wherein
        $T_p$ is the maximum temperature of the TREF-function;
        $T_w$ the weight average temperature of the TREF-function defined by $T_w = \sum c_i {}^* T_i / \omega c_i$ and $T_i$ the temperature at which the concentration $c_i$ of an elute is determined; and
        $c_i$ the concentration of the elute at the temperature $T_i$.

18. Film according to any of the preceding claims 1 to 17, wherein the film is biaxially oriented.

**Patentansprüche**

1. Folie, die ein Propylenpolymer mit hoher Kristallinität aufweist, das in Decalin lösliche Bestandteile bei 25°C von nicht mehr als 1,3 Gew. %, in Xylol lösliche Bestandteile bei 25°C von nicht mehr als 1,4 Gew. %, eine $MFR_2$ von 2 bis 6 g/10 min, gemäß ISO 1133 (230 °C, 2,16 kg Last) gemessen, einen Polydispersitätsindex (PI) von mindestens 5,0 und eine Länge der isotaktischen Sequenzen von mindestens 150 aufweist, und zwar als meso-Lauflänge mittels $^{13}$C NMR gemessen.

2. Folie nach Anspruch 1, wobei das Propylenpolymer in Xylol lösliche Bestandteile bei 25°C von nicht mehr als 1,3 Gew. % aufweist.

3. Folie nach Anspruch 1 oder 2, wobei das Propylenpolymer einen Isotaktizitäts-Index der Ketten (mmmm-Pentade) von mindestens 97 % aufweist, und zwar mittels $^{13}$C-NMR gemessen.

4. Folie nach einem der vorstehenden Ansprüche, wobei das Propylenpolymer eine Länge der isotaktischen Sequenzen von mindestens 200 aufweist, und zwar als Werte der meso-Lauflänge mittels $^{13}$C-NMR gemessen.

5. Folie nach einem der vorstehenden Ansprüche, wobei das Propylenpolymer ein $M_w/M_n$ von mindestens 5 aufweist, und zwar mittels SEC gemessen.

**6.** Folie nach einem der vorstehenden Ansprüche, wobei das Propylenpolymer einen Strukturviskositätsindex von mindestens 12 aufweist, der das Verhältnis zwischen der Nullviskosität und der Viskosität bei einer Scherbeanspruchung von 50.000 Pa (SHI(0/50)) ist.

**7.** Folie nach einem der vorstehenden Ansprüche, wobei das Propylenpolymer eine $MFR_2$ von 2 bis 5 g/10 min aufweist, und zwar gemäß ISO 1133 (230°C, 2,16 kg Last) gemessen.

**8.** Folie nach einem der vorstehenden Ansprüche, wobei das Propylenpolymer eine Schmelztemperatur ($T_m$) von mindestens 162 °C aufweist, und zwar mittels DSC gemessen.

**9.** Folie nach einem der vorstehenden Ansprüche, wobei das Propylenpolymer eine Kristallisationstemperatur ($T_{cr}$) von mindestens 113 °C, vorzugsweise mindestens 115 °C aufweist, und zwar mittels DSC gemessen.

**10.** Folie nach einem der vorstehenden Ansprüche, wobei das Propylenpolymer eine Kristallinität von mindestens 50 % aufweist, und zwar durch DSC-Messungen berechnet.

**11.** Folie nach einem der vorstehenden Ansprüche, wobei das Propylenpolymer einen Al-Gehalt von weniger als 50 ppm aufweist.

**12.** Folie nach einem der vorstehenden Ansprüche, wobei das Propylenpolymer ein Homopolymer ist.

**13.** Folie nach einem der vorstehenden Ansprüche, wobei das Propylenpolymer in Bezug auf die Molekulargewichtsverteilung ein multimodales Polymer ist.

**14.** Folie nach Anspruch 13, wobei das Propylenpolymer zwei Propylenpolymerkomponenten mit einem unterschiedlichen Gewichtsmittel des Molekulargewichts ($M_w$), vorzugweise ein Reaktorgemisch von isotaktischen Homopolymeren, umfasst.

**15.** Folie nach Anspruch 14, wobei das Propylenpolymer aus 30 bis 70 Gew.-% eines Anteils mit geringem Molekulargewicht (LMW) und 70 bis 30 Gew.-% eines Anteils mit hohem Molekulargewicht (HMW) besteht.

**16.** Folie nach einem der vorstehenden Ansprüche, wobei das Propylenpolymer ein in einem Reaktor erzeugtes Propylenpolymer ist.

**17.** Folie nach einem der vorstehenden Ansprüche, wobei das Propylenpolymer Folgendes aufweist:

a) eine $T_p$ von mindestens 122,5 °C und
b) eine $T_w$ von mindestens 118 °C,

wobei $T_p$ und $T_w$ anhand der Funktion der Elutionsfraktionierung mit Temperaturerhöhung (TREF) des Propylenpolymers im Bereich von 80 bis 140 °C berechnet werden, wobei
$T_p$ die Höchsttemperatur der TREF-Funktion ist;
$T_w$ das Gewichtsmittel der Temperatur der TREF-Funktion ist, das mit $T_w = \sum c_i {}^* T_i / \omega c_i$ definiert wird; und
$T_i$ die Temperatur ist, bei der die Konzentration $c_i$ des eluierten Stoffs bestimmt wird; und
$c_i$ die Konzentration des eluierten Stoffs bei der Temperatur $T_i$ ist.

**18.** Folie nach einem der vorstehenden Ansprüche 1 bis 17, wobei die Folie biaxial orientiert ist.

**Revendications**

**1.** Film comprenant un polymère de propylène hautement cristallin ayant des fractions solubles dans la décaline non supérieures à 1,3 % en poids à 25 °C, des fractions solubles dans le xylène non supérieures à 1,4 % en poids à 25 °C, un $MFR_2$ de 2 à 6 g/10 min, mesuré selon ISO 1133 (230 °C, charge de 2,16 kg), un indice de polydispersité (PI) d'au moins 5,0, et une longueur de séquence isotactique d'au moins 150, mesurée en tant que valeurs de longueur de section méso par RMN-[13]C.

**2.** Film selon la revendication 1, dans lequel le polymère de propylène a des fractions solubles dans le xylène non supérieures à 1,3 % en poids à 25 °C.

**3.** Film selon la revendication 1 ou 2, dans lequel le polymère de propylène a un indice d'isotacticité de chaîne (pentades mmmm) d'au moins 97 %, mesuré par RMN-$^{13}$C.

**4.** Film selon l'une quelconque des revendications précédentes, dans lequel le polymère de propylène a une longueur de séquence isotactique d'au moins 200, mesurée en tant que valeurs de longueur de section méso par RMN-$^{13}$C.

**5.** Film selon l'une quelconque des revendications précédentes, dans lequel le polymère de propylène a un $M_w/M_n$ d'au moins 5, mesuré par SEC.

**6.** Film selon l'une quelconque des revendications précédentes, dans lequel le polymère de propylène a un indice de fluidisation par cisaillement qui est le rapport entre la viscosité à un cisaillement zéro et la viscosité à la contrainte de cisaillement de 50 000 Pa (SHI(0/50)) d'au moins 12.

**7.** Film selon l'une quelconque des revendications précédentes, dans lequel le polymère de propylène a un $MFR_2$ de 2 à 5 g/10 min, mesuré selon ISO 1133 (230 °C, charge de 2,16 kg).

**8.** Film selon l'une quelconque des revendications précédentes, dans lequel le polymère de propylène a une température de fusion ($T_m$) d'au moins 162 °C, mesurée par DSC.

**9.** Film selon l'une quelconque des revendications précédentes, dans lequel le polymère de propylène a une température de cristallisation ($T_{cr}$) d'au moins 113 °C, de préférence d'au moins 115 °C, mesurée par DSC.

**10.** Film selon l'une quelconque des revendications précédentes, dans lequel le polymère de propylène a une cristallinité d'au moins 50 %, calculée à partir de mesures de DSC.

**11.** Film selon l'une quelconque des revendications précédentes, dans lequel le polymère de propylène a une teneur en Al inférieure à 50 ppm.

**12.** Film selon l'une quelconque des revendications précédentes, dans lequel le polymère de propylène est un homopolymère.

**13.** Film selon l'une quelconque des revendications précédentes, dans lequel le polymère de propylène est un polymère multimodal au regard de la distribution de masse moléculaire.

**14.** Film selon la revendication 13, dans lequel le polymère de propylène comprend deux composants polymères de propylène ayant différentes masses moléculaires moyennes en poids ($M_w$), de préférence un mélange en réacteur d'homopolymères isotactiques.

**15.** Film selon la revendication 14, dans lequel le polymère de propylène consiste en 30 à 70 % en poids d'une fraction de masse moléculaire faible (LMW) et 70 à 30 % en poids d'une fraction de masse moléculaire élevée (HMW).

**16.** Film selon l'une quelconque des revendications précédentes, dans lequel le polymère de propylène est un polymère de propylène fabriqué en réacteur.

**17.** Film selon l'une quelconque des revendications précédentes, dans lequel le polymère de propylène a

a) une $T_p$ d'au moins 122,5 °C et
b) une $T_w$ d'au moins 118 °C,

la $T_p$ et la $T_w$ étant calculées à partir de la fonction de fractionnement par élution à température croissante (TREF) du polymère de propylène dans la plage allant de 80 à 140 °C,
$T_p$ étant la température maximale de la fonction TREF ;
$T_w$ étant la température moyenne en poids de la fonction TREF définie par $T_w = \sum c_i * T_i / \omega c_i$ et Ti étant la température à laquelle la concentration $c_i$ d'un produit élué est déterminée ; et
$c_i$ étant la concentration du produit élué à la température Ti.

**18.** Film selon l'une quelconque des revendications 1 à 17 précédentes, dans lequel le film est orienté biaxialement.

Fig. 1

Fig. 2

Fig. 3

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0339804 A
- WO 2004013193 A
- EP 0887379 A
- WO 9212182 A
- US 5234879 A
- WO 9219653 A
- WO 9219658 A
- WO 9933843 A
- WO 9924478 A
- WO 9924479 A

**Non-patent literature cited in the description**

- **T. HAYASHI ; Y. INOUE ; R. CHÜJÖ ; T. ASAKURA.** *Polymer,* 1988, vol. 29, 138-43
- **CHUJO R et al.** *Polymer,* 1994, vol. 35, 339
- **HEINO, E.L. ; LEHTINEN, A ; TANNER, J. ; SEPPÄLÄ, J. ; NESTE OY ; PORVOO, FINLAND.** Rheological characterization of polyethylene fractions. *Theor. Appl. Rheol., Proc. Int. Congr. Rheol.,* 1992, 1 360-362
- **HEINO, EEVA-LEENA.** The influence of molecular structure on some rheological properties of polyethylene. *Annual Transactions of the Nordic Rheology Society,* 1995